# EUROPEAN PATENT SPECIFICATION

(11) **EP 0 498 584 B1**
(45) Date of publication and mention of the grant of the patent: **10.01.1996**
(21) Application number: 92300876.7
(22) Date of filing: 31.01.1992
(51) Int. Cl.: B60T 8/36

(54) **Fluid pressure modulator valve device**
Druckluftregelventil
Valve modulatrice pour fluide de pression

(30) Priority: 02.02.1991 GB 9102313
(43) Date of publication of application: 12.08.1992
(73) Proprietor: Knorr-Bremse Systems for Commercial Vehicles Limited, Kingswood, Bristol BS15 2NL (GB)
(72) Inventor: Hallett, Roger Charles, Tetbury, Gloucester (GB); Bowker, Glenn Stephen, Longwell Green, Bristol BS15 6BS (GB)
(74) Representative: Hogg, Jeffery Keith

(56) References cited:
- EP-A- 0 154 784
- EP-A- 0 266 555
- DE-A- 2 655 951

## Description

This invention relates to a fluid pressure modulator valve device and relates especially but not exclusively to a pressure modulator valve device for modulating air pressure in a compressed air braking system.

In some compressed air vehicle braking systems it is a requirement to provide each braked wheel or axle of a vehicle with a modulator valve capable of responding to electrical signals received from an electronic controller to override the drivers' brake valve control of braking pressure to the respective wheel or axle in the event of a tendency for the wheel to lock. Locking of wheels can cause a dangerous skidding condition and is preferably to be totally avoided whilst seeking to maintain efficient braking. The controller is usually designed to process wheel speed sensor outputs and determines when wheel deceleration is indicative of a skid being imminent. The controller transmits signal pulses to the respective modulator valve either to cause the modulator valve to interrupt a connection between an input port and a delivery port to thereby hold the delivered pressure at a certain existing value or vent the delivered pressure and thereby reduce the braking force applied to the respective wheel.

Typical modulator valve devices which have already been proposed comprise a first diaphragm valve operable to close a connection between an input port and a delivery port and a second diaphragm valve operable to open a connection between the delivery port and a vent and in both cases the diaphragm valves are operated by pilot signal pressures applied thereto via solenoid valves. The solenoid valves and the diaphragm valves are preferably carried in a common housing which is conveniently mountable on the wheel brake assembly, axle or chassis as close to the brake actuator as possible.

One previously proposed modulator valve is described in European Patent Specification Number 0 266 555 in which it is necessary to assemble the diaphragm from openings on opposing sides of the common housing. Moreover, although not discussed in the mentioned European Specification, it has been found that in similar modulator valves critical setting of the solenoid valves has been necessary in quantity production assembly of the modulator valves. Such critical setting is necessary to ensure that the solenoid valve armature travels are within close tolerance limits.

The object of the present invention is to provide an improved modulator valve wherein the above shortcomings are reduced and to provide a modulator valve which can be integrated into a fluid pressure operable brake actuator. According to the present invention there is provided a fluid pressure modulator valve device comprising a housing having a fluid pressure input port a fluid pressure delivery port and a vent port, a first fluid pressure pilot signal responsive valve operable to close a communication between the input port and the delivery port, a second fluid pressure pilot signal responsive valve operable to connect the delivery port to the vent port said first and second valves being arranged side by side and respective electromagnetically operable pilot valves to apply pilot signals to said first and second valves, said first and second valves, characterised in that said first and second valves each have a valve member movable in a first direction to uncover its respective valve seat and said electromagnetically operable pilot valves are arranged to be movable in mutually parallel but opposite directions in a plane transverse to the first direction.

In order that the invention may be more clearly understood and readily carried into effect the same will be further described by way of example with reference to the accompanying drawings of which:
Fig. 1, is a schematic diagram providing a simple illustration of the arrangement and operation of a modulator valve device of the invention
Figs. 2a and 2b, illustrate sectional and end views respectively of a proposed modulator in accordance with the invention
Fig. 3, is a much enlarged section diagrammatic view of solenoid valves of a pilot valve block employed in the modulator valve of Figs. 1 and 2 and
Fig. 4, illustrates in section a fragmentary view of a compressed air brake actuator incorporating a modulator valve in accordance with the invention.

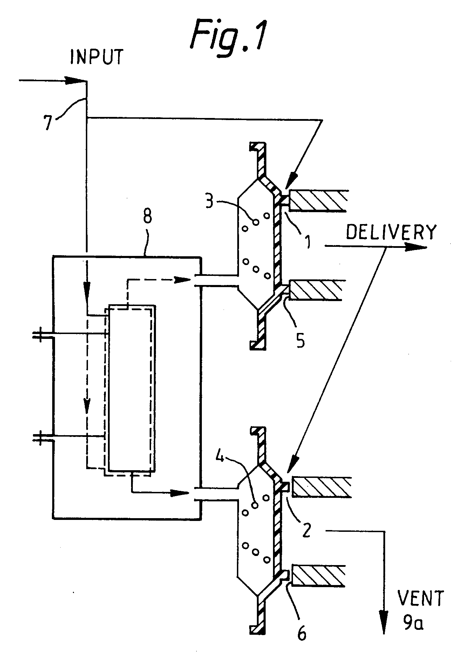

Referring to Fig. 1, in the schematic illustration a pair of diaphragm valves denoted by references 1 and 2 are shown to be lightly urged by springs 3 and 4 onto annular valve seats 5 and 6. Input fluid pressure at a port 7 is communicated to the diaphragm valve 1 and also as a supply source to an electromagnetic pilot valve block 8. Delivery pressure at a port 9 is further communicated to the diaphragm valve 2. Valves 1 and 2 operate as a "HOLD" valve and as a "VENT" valve respectively. Normally, valve 1 is supplied with no pilot signal from valve block 8 and all variations of the input pressure can be communicated to the delivery port. In contrast, the diaphragm valve 2 is normally supplied with a pilot pressure signal of substantially the same magnitude as the input pressure from the valve block 8 so valve 2 is held seated and the delivery is not vented. In the event of a potential wheel locking condition tending to occur the block 8 is electrically signalled to supply a pilot signal pressure to diaphragm valve 1 which is thereby held closed and increase of delivered pressure is prevented. Again, if a greater tendency to wheel lock exists the block 8 is signalled to vent the pilot pressure signal to diaphragm valve 6 and the delivery pressure is vented via vent port 9a. It will be understood that the foregoing operation takes place in a repetitive and pulsating manner allowing fast but fine control of the delivery pressure such as to maintain a high brake efficiency without locking the wheels of the vehicle.

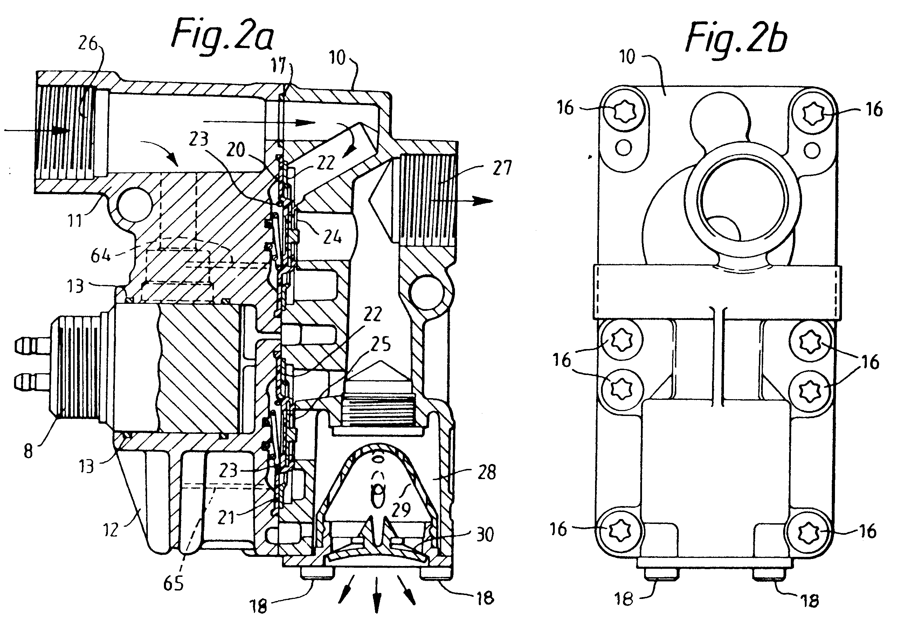

Referring now to Figs. 2a and 2b, the proposed modulator as shown therein in greater detail comprises three main housing parts. A first housing part comprises a casting denoted by reference 10, second housing part comprises two casting portions 11 and 12 and the third housing part comprises the pilot valve block 8 which is retained between dirt-excluding seals 13 between castings 11 and 12 and carries solenoid valves operable by electrical signals applied at terminals 14 and 15 Casting portions 11 and 12 are each provided with screw-threaded drillings to receive fastening screws 16 (see Fig. 2b) inserted through the part 10, block 8 being placed in position between parts 11 and 12 and together with the internal components before finally tightening screws 16.

The internal components comprise o-ring 17, and moulded diaphragm valve elements 20 and 21 retained by their peripheries between part 10 and respective portions 11 and 12 and respective associated backing washers 22 and light springs 23. These light springs act in a sense to hold the diaphragm valve elements 20 and 21 against respective seats 24 and 25. An input port 26 in part 11 is able to communicate via one unseated diaphragm valve (20, 24) with a delivery port 27 of the first housing part 10 and the delivery port 27 is able to communicate, via unseated diaphragm valve (21, 25), with a vented chamber 28 which communicates with atmosphere via a mesh 29 and one way breather 30, retained by screws 18.

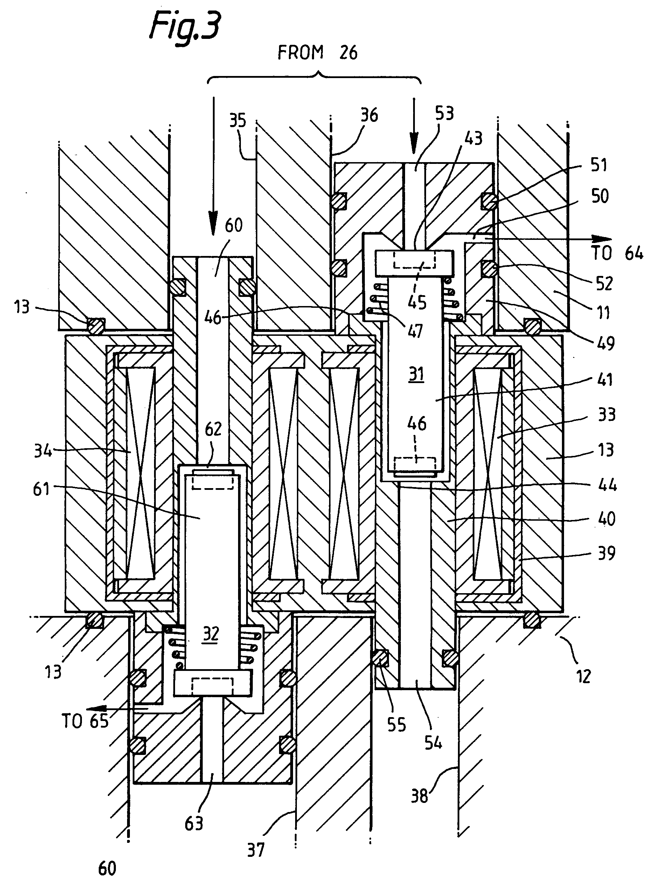

Referring now to Fig. 3 this illustrates on an enlarged scale a sectional but diagrammatic view of the moulded solenoid pilot valve block 8. The block 8 is of moulded electrical insulating material within which two solenoid-operated armature valve assemblies 31 and 32 are mounted passing through the respective solenoids 33, 34. Valve assembly 31 is a pilot valve operable to apply a controlling pressure to the diaphragm 20 of the above-mentioned "HOLD" valve and valve assembly 32 is a pilot valve operable to apply a controlling pressure to the diaphragm 21 of the "VENT" valve. The valve assemblies 31 and 32 are thus located coaxially with the respective solenoids 33 and 34 which are moulded into the block 8, substantially parallel with one another so that the subsequently inserted valve assemblies 31 and 32 are aligned with passages 35, 36 and 37, 38 respectively of the housing parts 11 and 12. Each solenoid also has a C-shaped iron core such as 39 of assembly 31. The pilot valve assembly 31 comprises a tubular static part 40 within which a axially movable ferromagnetic armature 41 is slidingly located between valve seats 43 and 44, seat 43 being provided in an end member 49 of the assembly 31. The ends of 41 carry suitable synthetic valve inserts 45 and 46 to provide good sealing engagement with seats 43 and 44 and the outer end of 41 carries a shoulder between which and an internal shoulder 46 of 40 a spring 47 ensures continuous engagement of the valve insert 45 with seat 43 when the solenoid 33 is not energised. The armature part 41 is inserted in the part 40 before attachment of the end member 49. The end member 49 is provided with air flow passages 50 which provide communication between the interior thereof and the annular region between respective "O" rings 51 and 52. This region communicates passage 53 with the "hold" diaphragm 20 via passage 64 (Fig. 2a). In the de-energised position shown, passage 50 is seen to be directly communicated via the passage 54 in the lower end of 40 to the vent port 28, the lower end of 40 being sealingly located within 12 with an o-ring 55.

The vent solenoid pilot valve assembly 32 is substantially the same as the assembly 31 but as seen in Fig. 3 it is inserted in the block 8 in the opposite direction. Moreover, the upper passage denoted by reference 60 is the passage which receives incoming air pressure. The armature 61, 51 is in engagement with the lower seat 62 when the solenoid 34 is de-energised so that vent passage 63 is closed and the incoming pressure is communicated via passage 60 the upper open valve seat 62 and passage 65 (Fig 2a) to the vent valve diaphragm 21 to hold the vent valve (21, 25) closed in normal condition.

By virtue of the described arrangement wherein the "hold" diaphragm valve 24 and the "vent" diaphragm valve 25 are arranged mutually side-by-side and generally in the same plane as seen in Fig. 2a and the solenoid operable pilot valves are arranged in juxtaposition with their axes in a plane parallel to the plane of the diaphragm valves, the signal paths 64, 65 for the pressure signals from the pilot valves can be substantially the same and as short as possible. Accordingly, the response times of the hold valve and the vent valve are able to be optimised having regard to the operating pulsing frequency of a vehicle wheel antilock system in which the modulator valve device is employed. Moreover, since the solenoid valve assemblies 31 and 32 are each able to be assembled prior to being inserted in the block 8 and the modulator valve body parts, fine tolerancing within these assemblies 31 and 32 is not required to extend to the other parts of the complete assembly in order to ensure that predetermined valve clearances are consistently achieved.

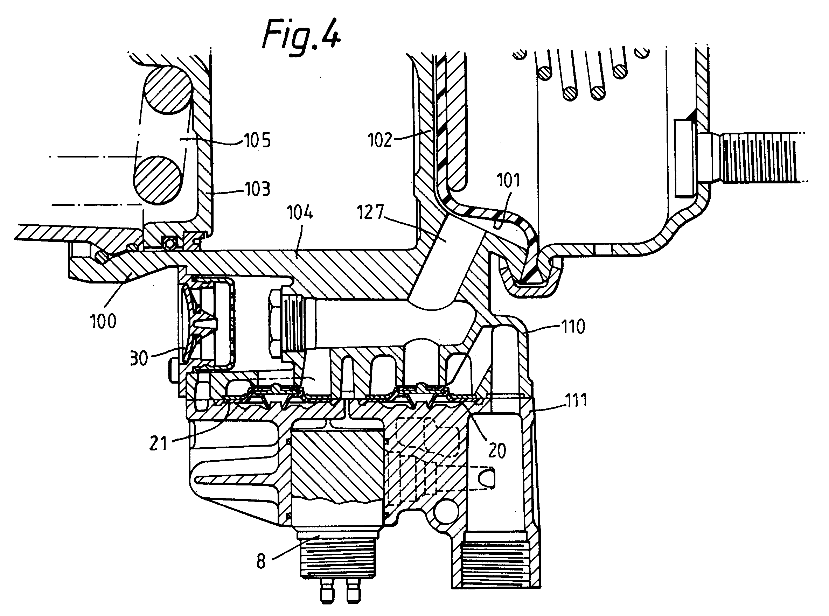

A particular feature of the fluid pressure modulator valve device in accordance with the invention resides in the fact that it can be formed of a number of housing parts one of which includes at least the fluid pressure delivery port and may readily be designed into the body of a compressed air operable brake actuator. An example of such an arrangement is shown in part sectional view in Fig. 4.

Referring to Fig. 4, a first housing part 110, such as part 10 of the modulator valve shown in Fig. 2a, is formed integrally with the centre casting 100 of a compressed air operable brake actuator. In the fragmentary sectional view of Fig. 4, the delivery part 127 of the modulator valve comprises in turn the input port to a compressed air operable diaphragm brake chamber. Delivered pressure therefore acts directly on the service diaphragm 101. To the left of the pressure-containing wall 102 there is a spring brake piston 103 slideable in a bore 104, this piston serving to compress a power spring 105 in normal operation. Such brake actuators are well known in the art of compressed air braking and need not be further discussed herein. However it will be understood that in the present example the modulator valve operates only in relation to the service diaphragm.

The remaining construction and operation of the modulator valve is substantially as described in the foregoing with reference to Fig. 2a and Fig. 3 and it will be appreciated that in view of the close proximity of the modulator valve to the service brake actuator optimal operational response may be achieved and manufacturing and assembly costs are reduced due to the fact that not only are interconnection and mountings reduced but also the overall cost of the modulator valve is less than with a separately mounted modulator valve.

## Claims

1. A fluid pressure modulator valve device comprising a housing (10,11) having a fluid pressure input port (26) a fluid pressure delivery port (27) and a vent port(28), a first fluid pressure pilot signal responsive valve (20/24) operable to close a communication between the input port (26) and the delivery port (27), a second fluid pressure pilot signal responsive valve (21/25) operable to connect the delivery port (27) to the vent port (28) said first and second valves being arranged side by side and respective electromagnetically operable pilot valves (32;31) to apply pilot signals to said first and second valves, characterised in that said first and second valves (20/24, 21/25) each have a valve member (24; 25) movable in a first direction to uncover its respective valve seat and said electromagnetically operable pilot valves (32,31) are arranged to be movable in mutually parallel but opposite directions in a plane transverse to the first direction.

2. A fluid pressure modulator valve device as claimed in claim 1, characterised in that said housing comprises at least a first housing part (10) and a second housing part (11/12).

3. A fluid pressure modulator valve device as claimed in claim 1, said housing being formed of at least two housing parts (110,111) and characterised in that a first (110) of said parts is integral with a body of a fluid pressure operable brake actuator, said delivery port (127) comprising a pressure input port of said actuator.

4. A fluid pressure modulator valve device as claimed in claim 3, said fluid pressure operable brake actuator comprising a combined spring brake actuator portion and service brake actuator portion and having a centre casting common to both actuator portions characterised in that said first of said body parts of the valve device is integral with said centre casting.

5. A fluid pressure modulator valve device as claimed in claim 2, 3 or 4 characterised in that said second housing part comprises two separable housing portions (11,12) between which said pilot valves are located.

6. A fluid pressure modulator valve device as claimed in claim 4 characterised in that said pilot valves are independent solenoid valve assemblies carried in a single moulded solenoid block said block being locatable between said separable housing portions (11,12).

7. A fluid pressure modulator valve device as claimed in claim 4 characterised in that said solenoid block includes a C-shaped iron core (39) for the solenoid (33) of each said pilot valve.

8. A fluid pressure modulator valve device as claimed in claim 1, 2, 3, 4, 5, 6 or 7 characterised in that said first and second valves (20/24, 21/25) have diaphragms arranged substantially coplanar.

9. A fluid pressure modulator valve device as claimed in claim 2, 3, 4, 5, 6 or 7 characterised in that said first (20/24) and second (21/25) valves have diaphragms (20,21) arranged substantially coplanar and being retained by their peripheries in position between said first housing part (10) and said second housing part (11,12) to engage respective valve seats (24,25) located in a said first housing part.

10. A fluid pressure modulator valve as claimed in claim 9 characterised in that each said valve diaphragm (20, 21) is retained in position between the first housing part and respective separable portions (11,12) of said second housing part.

## Patentansprüche

1. Fluiddruck-Regelventileinrichtung mit einem Gehäuse (10,11) mit einem Fluiddruckeinlaß (26) und einem Fluiddruckauslaß (27) und einer Belüftungsöffnung (28), einem ersten, auf ein Fluiddruck-Steuersignal ansprechenden Ventil (20/24), das betätigbar ist zum Schließen der Verbindung zwischen dem Einlaß (26) und dem Auslaß (27), einem zweiten, auf ein Fluiddruck-Steuersignal ansprechenden Ventil (21/25), das betätigbar ist zum Verbinden des Auslasses (27) und der Belüftungsöffnung (28), welches erste und zweite Ventil seitlich nebeneinander angeordnet sind, und entsprechenden elektromagnetisch betätigbaren Steuerventilen (32;31) zur Übertragung von Steuersignalen an das erste und zweite Ventil, dadurch **gekennzeichnet**, daß das erste und zweite Ventil (20/24, 21/25) ein Ventilglied (24,25) aufweisen, das in eine erste Richtung zum Freilegen des jeweiligen Ventilsitzes beweglich ist, und daß die elektromagnetisch betätigbaren Steuerventile (32;31) so ausgebildet sind, daß sie parallel zueinander, jedoch in entgegengesetzte Richtung in einer quer zu der ersten Richtung verlaufenden Ebene beweglich sind.

2. Fluiddruck-Regelventileinrichtung nach Anspruch 1, dadurch **gekennzeichnet**, daß das Gehäuse wenigstens einen ersten Gehäuseteil (10) und einen zweiten Gehäuseteil (11/12) umfaßt.

3. Fluiddruck-Regelventileinrichtung nach Anspruch 1, welches Gehäuse aus wenigstens zwei Gehäuseteilen (110,111) besteht, dadurch **gekennzeichnet**, daß ein erster Gehäuseteil (110) einstückig mit einem Körper eines fluiddruckbetätigten Bremsorgans ausgebildet ist und daß der Auslaß (127) einen Druckeinlaß des Bremsorgans umfaßt.

4. Fluiddruck-Regelventileinrichtung nach 3, bei dem das fluiddruckbetätigte Bremsorgan eine Kombination aus einer Federbremseinrichtung und einer Betätigungsbremseinrichtung umfaßt und ein zentrales, beiden Bremseinrichtungen gemeinsames Gußteil umfaßt, dadurch **gekennzeichnet**, daß der erste und zweite Gehäuseteil der Ventileinrichtung einstückig mit dem zentralen Gußteil ausgebildet ist.

5. Fluiddruck-Regelventileinrichtung nach Anspruch 2, 3 oder 4, dadurch **gekennzeichnet**, daß der zweite Gehäuseteil zwei trennbare Gehäusebereiche (11,12) umfaßt, zwischen denen die Steuerventile angeordnet sind.

6. Fluiddruck-Regeiventileinrichtung nach Anspruch 4, dadurch **gekennzeichnet**, daß die Steuerventile unabhängige Magnetventilanordnungen sind, die in einem einzigen geformten Magnetblock angeordnet sind, welcher Block zwischen den trennbaren Gehäusebereichen (11,12) anzuordnen ist.

7. Fluiddruck-Regelventileinrichtung nach Anspruch 4, dadurch **gekennzeichnet**, daß der Magnetblock einen C-förmigen Eisenkern (39) für den Magneten jedes der Steuerventile aufweist.

8. Fluiddruck-Regelventileinrichtung nach Anspruch 1, 2, 3, 4, 5, 6 oder 7, dadurch **gekennzeichnet**, daß die ersten und zweiten Ventile (20/24, 21/25) im wesentlichen in einer Ebene angeordnete Membranen aufweisen.

9. Fluiddruck-Regelventileinrichtung nach Anspruch 2, 3, 4, 5, 6 oder 7, dadurch **gekennzeichnet**, daß das erste und zweite Ventil (20/24, 21/25) Membranen (20,21) aufweist, die im wesentlichen in einer Ebene angeordnet sind und an ihrem Umfang in Position zwischen dem ersten Gehäuseteil (10) und dem zweiten Gehäuseteile (11,12) gehalten werden und mit den jeweiligen Ventilsitzen (24,25) in dem ersten Gehäuseteil in Berührung stehen.

10. Fluiddruck-Regelventileinrichtung nach Anspruch 9, dadurch **gekennzeichnet**, daß die Ventil-Membran (20,21) in ihrer Position zwischen dem ersten Gehäuseteil und den entsprechenden trennbaren Bereichen (11,12) des zweiten Gehäuseteils gehalten ist.

## Revendications

1. Valve modulatrice de pression de fluide comprenant un corps (10,11) ayant un orifice d'entrée de pression de fluide (26), un orifice de sortie de pression de fluide (27) et un orifice d'évent (28), une première valve répondant à un signal pilote de pression de fluide (20/24) qui agit pour fermer une communication entre l'orifice d'entrée (26) et l'orifice de sortie (27), une deuxième valve répondant à un signal pilote de pression de fluide (21/25) qui agit pour connecter l'orifice de sortie (27) à l'orifice d'évent (28), lesdites première et deuxième valves étant disposées côte à côte, et des valves pilotes à commande électromagnétique respectives (32;31) pour appliquer des signaux pilotes auxdites première et deuxième valves, caractérisée en ce que lesdites première et deuxième valves (20/24,21/25) comprennent un élément obturateur (24;25) déplaçable dans une première direction pour découvrir son siège d'obturateur respectif, et lesdites valves pilotes à commande électromagnétique (32,31) sont agencées de manière à être déplaçables dans des directions mutuellement parallèles mais opposées, dans un plan transversal à la première direction.

2. Valve modulatrice de pression de fluide suivant la revendication 1, caractérisée en ce que ledit corps comprend au moins une première partie de corps (10) et une deuxième partie de corps ( 11/12).

3. Valve modulatrice de pression de fluide suivant la revendication 1, ledit corps étant formé d'au moins deux parties de corps (110;111),caractérisée en ce qu'une première (110) desdites parties est solidaire d'un corps d'un actionneur de frein à commande par pression de fluide, ledit orifice de sortie (127) constituant un orifice d'entrée de pression dudit actionneur.

4. Valve modulatrice de pression de fluide suivant la revendication 3, ledit actionneur de frein à commande par pression de fluide comprenant une portion d'actionneur de frein à ressort et une portion d'actionneur de frein de service combinées et ayant une partie coulée centrale commune aux deux portions d'actionneur, caractérisée en ce que ladite première desdites parties de corps de la valve est solidaire de ladite partie coulée centrale.

5. Valve modulatrice de pression de fluide suivant la revendication 2,3 ou 4, caractérisée en ce que la dite deuxième partie de corps de valve comprend deux portions de corps séparables (11,12) entre lesquelles sont placées lesdites valves pilotes.

6. Valve modulatrice de pression de fluide suivant la revendication 4, caractérisée en ce que lesdites valves pilotes sont des électrovannes indépendantes portées dans un bloc de solénoïdes moulé unique, ledit bloc pouvant se loger entre lesdites portions de corps séparables (11,12).

7. Valve modulatrice de pression de fluide suivant la revendication 4, caractérisée en ce que ledit bloc de solénoïdes comprend un noyau en fer en forme de C (39) pour le solénoïde (33) de chaque dite valve pilote.

8. Valve modulatrice de pression de fluide suivant la revendication 1,2,3,4,5,6 ou 7, caractérisée en ce que lesdites première et deuxième valves (20/24,21/25) comportent des membranes disposées sensiblement dans un même plan.

9. Valve modulatrice de pression de fluide suivant la revendication 2,3,4,5,6 ou 7, caractérisée en ce que lesdites première (20/24) et deuxième (21/25) valves comportent des membranes (20,21) disposées sensiblement dans un même plan et retenues par leur périphérie en position entre ladite première partie de corps (10) et ladite deuxième partie de corps (11,12) de manière à être en contact avec des sièges d'obturateur respectifs (24,25) placés dans unedite première partie de corps.

10. Valve modulatrice de pression de fluide suivant la revendication 9,caractérisée en ce que chaque dite membrane de valve (20,21) est retenue en position entre la première partie de corps et des portions séparables respectives (11,12) de ladite deuxième partie de corps.
